# EUROPEAN PATENT SPECIFICATION

(11) **EP 2 298 856 B1**
(45) Date of publication and mention of the grant of the patent: **25.12.2019**
(21) Application number: 09742773.6
(22) Date of filing: 11.05.2009
(51) Int. Cl.: C10M 169/06, C10N 30/00, C10N 30/06, C10N 30/08, C10N 40/04, C10N 50/10, C10N 10/04, C10N 10/12

(54) **GREASE COMPOSITION FOR CONSTANT VELOCITY JOINT AND CONSTANT VELOCITY JOINT**
SCHMIERFETTZUSAMMENSETZUNG FÜR HOMOKINETISCHES GELENK UND HOMOKINETISCHES GELENK
COMPOSITION DE GRAISSE POUR JOINT HOMOCINÉTIQUE ET JOINT HOMOCINÉTIQUE

(30) Priority: 09.05.2008 JP 2008123671
(43) Date of publication of application: 23.03.2011
(73) Proprietor: Kyodo Yushi Co., Ltd., Kanagawa 251-8588 (JP); NTN Corporation, Osaka-shi, Osaka 550-0003 (JP)
(72) Inventor: TANIMURA Ko, Fujisawa-shi Kanagawa 251-8588 (JP); KONDO Shinya, Fujisawa-shi Kanagawa 251-8588 (JP); TAKABE Shinichi, Iwata-shi Shizuoka 4388510 (JP); KONOMOTO Takeyoshi, Iwata-shi Shizuoka 438-8510 (JP)
(74) Representative: Vossius & Partner Patentanwälte Rechtsanwälte mbB
(86) International application number: PCT/JP2009/058750
(87) International publication number: WO 2009/136649

(56) References cited:
- WO-A1-99/20719
- WO-A1-2005/078053
- WO-A1-2008/007671
- WO-A1-2008/007671
- JP-A- 9 087 649
- JP-T- 2001 520 301

## Description

### [Technical Field]

The present invention relates to a grease composition capable of reducing the rotating torque of constant velocity joints at low temperatures and improving the durability and temperature control performance of the joints; and a constant velocity joint where the above-mentioned grease composition is packed. More particularly, the invention relates to a grease composition capable of improving the high-speed durability and temperature control performance of the constant velocity joints and reducing the starting rotational torque at low temperatures; and a constant velocity joint containing the above-mentioned grease composition.

### [Background Art]

In the current automotive industry, production of the front-engine front-wheel drive (FF) vehicles has been increasing in response to the demands to ensure a lighter weight and a larger living space. Also, the four-wheel drive (i.e., 4WD) cars are increasingly chosen for their functionality. In the FF cars and 4WD cars, the front wheels work to transmit power and control the steering. Those cars, therefore, adapt a drive shaft using a constant velocity joint capable of transmitting the rotational motion at constant speed regardless of various changes in the crossing angle formed by two axes in order to ensure smooth power transmission, for example, even when the steering wheel is turned to full lock.

The front-engine rear-wheel drive (FR) cars and the 4WD cars have a configuration that power driven by the engine is transmitted to the drive shaft of the rear wheels through a propeller shaft. It is known that the propeller shaft is a source to make noises and oscillations, and in addition transmits the noises and oscillations. The conventional propeller shaft composed of a Cardan joint and a slide spline has been replaced by a propeller shaft using the constant velocity joint capable of sliding in the axial direction as rotating at a constant velocity even though the operating angle varies.

As the performance of vehicles has been further improved in recent years, the cars producing high power are increasing. This will make a load applied to the constant velocity joint heavier and the lubricating conditions severer. At the same time, demands for a highly comfortable ride are also increasing.

The conditions where the propeller shaft is used are different from those for the drive shaft. For example, the load torque to the propeller shaft is lower, but the propeller shaft is driven under the rotation of higher speed. In light of this, the grease used in the constant velocity joint for propeller shaft is required to have more improved high-speed performance, such as superior high-speed durability and lower vibration under the high-speed operation, when compared with the grease for drive shaft.

The amount of generated heat (i.e., a rise of temperature) caused by rotation of the constant velocity joint can be used as an indicator of the high-speed performance. The limits of operating conditions of the constant velocity joint can be estimated from the above-mentioned rise of temperature.

The amount of generated heat tends to depend on the friction coefficient of grease. Development of a grease capable of exhibiting excellent temperature control performance under the circumstances of high temperature is expected.

Also, great importance is attached to smooth action of the constant velocity joint in severely cold areas. In the cold areas, the cars may probably be started under low temperature conditions. For the smooth starting of cars under such conditions, it becomes more important to reduce the rotating torque of grease at low temperatures.

However, no grease composition for constant velocity joints has been proposed that is capable of exhibiting excellent temperature control performance and durability and sufficiently reducing the rotating torque at low temperatures.

Conventionally, there are proposed grease compositions for constant velocity joints, containing a lubricant such as a base oil and a diurea based thickener, and an additive such as a molybdenum compound (as in, for example, JP 10-273691 A, JP 10-273692 A, JP 2001-11481 A, JP 2003-165988 A, JP 2005-226038 A, and JP 2006-16481 A).

There are also proposed grease compositions where a sulfur atom-containing compound is added to a grease comprising a particular trimellitic acid ester and a particular thickener (as in, for example, JP 11-131082 A).

There are also proposed grease compositions designed to stabilize the fluctuations of rotational resistance at low temperatures by using an ester oil as a base oil, and a molybdenum compound, polytetrafluoroethylene and zinc dithiophosphate as the additives (as in, for example JP 2007-138110 A).

However, the above-mentioned grease compositions for constant velocity joints are unsatisfactory in terms of the performance to control the temperature and improve the durability of the constant velocity joints when the rotational speed of the joints is as high as required of the constant velocity joints, and the performance to reduce the rotating torque at low temperatures. To make more improvements to the grease performance is needed.

WO 99/20719 (A1) describes a lubricating grease comprising a thickener in combination with a lubricating composition comprising a base oil in combination with molybdenum dithiocarbamate, zinc naphthenate and one or more metal dithiophosphates, and optionally one or more further metal dithiocarbamates. Preferably, the base oil is of mineral origin, is a poly(alpha-olefin), or a mixture thereof. It further describes a constant velocity joint packed with such a lubricating grease.

### [Summary of Invention]

### [Technical Problem]

An object of the invention is to provide a grease composition that can improve the durability of the constant velocity joints, suppress heat generation of the joints, and reduce the rotating torque at low temperatures, within the operating temperature range from 150 to -40°C.

Another object of the invention is to provide a constant velocity joint in which the above-mentioned grease composition is packed.

### [Solution to Problem]

After the inventors of the invention have intensively studied to achieve the above-mentioned objects, it was found that a grease composition comprising particular ingredients can suppress heat generation of the constant velocity joints, provide the joints with sufficient durability as required, and reduce the rotating torque at low temperatures, within the operating temperature range from 150 to -40°C. The grease composition for constant velocity joints according to the invention has been thus completed based on the above-mentioned findings.

Namely, the invention provides a grease composition for constant velocity joints and the constant velocity joint, as shown below.

The present invention relates to a grease composition for constant velocity joints, comprising the components (a) to (e), according to claims 1 to 4, and to the use of such a grease composition for constant velocity joints, according to claim 5.

Furthermore, the present invention relates to constant velocity joint comprising a constant velocity joint and such a grease composition, according to claims 6 and 7.

The grease composition for constant velocity joints, comprises the following components (a) to (e):
(a) a base oil comprising 10 mass% or more, with respect to the total mass of the base oil, of a synthetic ester oil,
(b) 1 to 30 mass%, based on the total mass of the grease composition, of a diurea thickener represented by the following formula (1):

   R¹NH-CO-NH-C₆H₄-p-CH₂-C₆H₄-p-NH-CO-NHR² (1)

   wherein R¹ and R², which may be the same or different, are each an alkyl group having 8 to 20 carbon atoms, an aryl group having 6 to 12 carbon atoms, or a cycloalkyl group having 6 to 12 carbon atoms,
(c) 0.1 to 10 mass%, based on the total mass of the grease composition, of a zinc dithiophosphate,
(d) 0.1 to 10 mass%, based on the total mass of the grease composition, of a molybdenum dialkyl dithiocarbamate sulfide represented by formula (2):

   [R⁴R⁵N-CS-S]₂-Mo₂OₘSₙ (2)

   wherein R⁴ and R⁵ are each independently an alkyl group having 1 to 24 carbon atoms; m is 0 to 3; and n is 1 to 4, wherein m + n = 4,
(e) 0.1 to 10 mass%, based on the total mass of the grease composition, of a zinc dialkyl dithiocarbamate, and
(f) optionally 0.1 to 10 mass%, based on the total mass of the grease composition, of a molybdenum disulfide,
wherein the synthetic ester oil is selected from triesters of the group consisting of hexyl trimellitic acid ester, octyl trimellitic acid ester, heptyl trimellitic acid ester, 2-ethylbutyl trimellitic acid ester, 2-ethylhexyl trimellitic acid ester, nonan-2-ol trimellitic acid ester, and isodecyl alcohol trimellitic acid ester.

### [Advantageous Effects of Invention]

The grease composition for constant velocity joints according to the invention can improve the temperature control performance and impart the required durability to the constant velocity joints when the rotational speed is high, and reduce the rotating torque at low temperatures, within the operating temperature range from 150 to -40°C. This allows the constant velocity joint to rotate at high speed, and the vehicles to start under the circumstances of low temperatures, thereby avoiding troubles of the constant velocity joints in the severely cold area. Advantageously, the grease composition can be used for cross groove type constant velocity joints which are designed suitably for reducing the vibration caused by high-speed rotation. More advantageously, the grease composition can be used for the cross groove type constant velocity joints adapted to propeller shafts which are required to display high-speed rotation performance.

### [Description of Embodiments]

The invention will now be explained in detail.

The claimed invention relates to a grease composition for constant velocity joints, comprising the following components (a) to (e), according to claims 1 to 4.

The grease composition for constant velocity joints described herein is characterized by comprising the above-mentioned components (a) to (e) as essential ingredients. Those components will now be described.

The synthetic oil used for the component (a) includes generally used lubricating oils such as synthetic hydrocarbon oils, synthetic ester oils, synthetic ether oils, polyglycols and the like, and mixtures of those oils. Preferable examples of the synthetic oil include synthetic hydrocarbon oils and synthetic ester oils.

In the present invention, the base oil comprises a synthetic ester oil.

In particular, poly(α-olefin) and polybutene can be given as the preferable examples of the synthetic hydrocarbon oil for the component (a).

Preferable synthetic ester oils used for the component (a) are those prepared from alcohols preferably having 6 to 22 carbon atoms and aromatic carboxylic acids preferably having 8 to 22 carbon atoms and preferably having 2 to 6 carboxyl groups. Examples of the alcohol having 6 to 22 alcohols include 1-hexanol, 2-hexanol, 3-hexanol, 1-heptanol, 4-methyl-2-pentanol, 2-heptanol, 3-heptanol, 1-octanol, 2-octanol, 2-ethyl-1-hexanol, 1-nonanol, nonan-2-ol, 3,5,5-trimethyl-1-hexanol, 1-decanol, 1-undecanol, lauryl alcohol, myristyl alcohol, cetyl alcohol, 14-methylhexadecan-1-ol, stearyl alcohol, oleyl alcohol, 16-methyl octadecanol, icosanol, isodecyl alcohol, 18-methyl nonadecanol, 18-methyl icosanol, docosanol, 20-methyl heneicosanol, 2-octyl dodecanol and the like.

Preferably, 1-hexanol, 2-ethyl-1-butanol, 1-octanol, 1-heptanol, 2-octanol, 2-ethyl-1-hexanol, nonan-2-ol, 2-ethyl-1-octanol, isodecyl alcohol and 2-octyl dodecanol are used.

Examples of the aromatic carboxylic acids having 8 to 12 carbon atoms and 2 to 6 carboxyl groups include phthalic acid, isophthalic acid, terephthalic acid, 5-methyl isophthalic acid, 4,5-dimethoxy phthalic acid, hemimellitic acid, trimellitic acid, trimesic acid, mellophanic acid, prehnitic acid, pyromellitic acid, and mellitic acid. Preferably, 5-methyl isophthalic acid, trimellitic acid and pyromellitic acid are used.

For example, the synthetic ester oils prepared from the above-mentioned alcohols and aromatic carboxylic acids are as follows:
<Diesters> hexyl phthalic acid ester, 2-ethylbutyl phthalic acid ester, octyl phthalic acid ester, heptyl phthalic acid ester, 2-octyl phthalic acid ester, 2-ethylhexyl phthalic acid ester, nonan-2-ol phthalic acid ester, 2-ethyloctyl phthalic acid ester, nonan-2-ol isophthalic acid ester, 2-ethyloctyl isophthalic acid ester, octyl 5-methyl isophthalic acid ester, nonan-2-ol 5-methyl isophthalic acid ester, hexyl terephthalic acid ester, and octyl terephthalic acid ester.
<Triesters> hexyl trimellitic acid ester, octyl trimellitic acid ester, heptyl trimellitic acid ester, 2-ethylbutyl trimellitic acid ester, 2-ethylhexyl trimellitic acid ester, nonan-2-ol trimellitic acid ester, and isodecyl alcohol trimellitic acid ester.
<Tetraesters> octylbenzene tetracarboxylic acid ester, heptylbenzene tetracarboxylic acid ester, hexylbenzene tetracarboxylic acid ester, 2-ethylbutyl benzene tetracarboxylic acid ester, 2-ethyloctyl benzene tetracarboxylic acid ester, and 2-octyldodecanol pyromellitic acid ester.

In the present invention, the synthetic ester oil is selected from the above triesters.

Each of those esters is a full-ester where all the carboxylic acids are esterified.

The content of the said triesters in the base oil is 10 mass% or more, preferably 20 mass% or more, with respect to the total mass of the base oil. The base oil may completely consist of the synthetic oils.

As thickener used as the component (b) in the invention, diurea thickeners represented by the following formula (1) are given:

R¹NH-CO-NH-C₆H₄-p-CH₂-C₆H₄-p-NH-CO-NHR² (1)

wherein R¹ and R², which may be the same or different are each an alkyl group having 8 to 20 carbon atoms, preferably 8 to 18 carbon atoms, an aryl group having 6 to 12 carbon atoms, preferably 6 to 7 carbon atoms, or a cycloalkyl group having 6 to 12 carbon atoms, preferably 6 to 7 carbon atoms.

The diurea thickener can be obtained, for example by reacting a certain diisocyanate with a certain monoamine. Preferable specific examples of the diisocyanate include diphenylmethane-4,4'-diisocyanate. The monoamines include aliphatic amines, aromatic amines, alicyclic amines, or the mixtures thereof. Specific examples of the aliphatic amines include aliphatic amines having 8 to 18 carbon atoms such as octylamine, dodecylamine, hexadecylamine, octadecylamine and oleylamine. Specific examples of the aromatic amines include aliphatic amines having 6 to 7 carbon atoms such as aniline and p-toluidine. Specific examples of the alicyclic amines include cyclohexylamine.

As the component (b), it is preferable to use the aliphatic urea based thickeners obtainable using octylamine, dodecylamine, hexadecylamine, octadecylamine, oleylamine particularly chosen from the above-mentioned monoamines or the mixtures thereof.

The thickener as the component (b) is contained in such an amount as to obtain a required consistency and in an amount of 1 to 30 mass%, preferably 5 to 20 mass%, based on the total mass of the grease composition.

The zinc dithiophosphate used as the component (c) in the invention includes the compounds represented by the following formula (1): 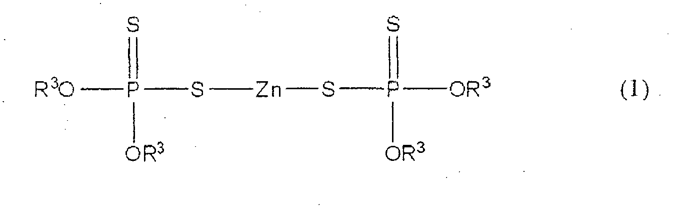 wherein R³ is an alkyl group having 1 to 24 carbon atoms or an aryl group having 6 to 30 carbon atoms, preferably an alkyl group having 1 to 5 carbon atoms.

The content of zinc dithiophosphate as the component (c) is in the range of 0.1 to 10 mass%, and preferably 0.5 to 5 mass%, based on the total mass of the grease composition. When the content is less than 0.1 mass%, the effects will become insufficient. With the content of more than 10 mass%, further improvement in the effects cannot be recognized.

The molybdenum dialkyl dithiocarbamate sulfide used as the component (d) in the invention is represented by formula (2):

[R⁴R⁵N-CS-S]₂-Mo₂OₘSₙ (2)

wherein R⁴ and R⁵ are each independently an alkyl group having 1 to 24 carbon atoms, preferably 2 to 18 carbon atoms; and m is 0 to 3, n is 1 to 4, and m+n=4.

The content of the molybdenum dialkyl dithiocarbamate sulfide as the component (d) is in the range of 0.1 to 10 mass%, and preferably 0.5 to 5 mass%, based on the total mass of the grease composition. When the content is less than 0.1 mass%, the effects will become insufficient. Even though the content of the component (d) exceeds 10 mass%, further enhancement of the effect cannot be recognized.

Specific examples of zinc dialkyl dithiocarbamate used as the component (e) in the invention may include the following compounds indicated by formula (3):

[R⁶₂N-CS-S]₂-Zn (3)

wherein R⁶ indicates a primary or secondary alkyl group having 1 to 24 carbon atoms or an aryl group having 6 to 30 carbon atoms, preferably a primary or secondary alkyl group having 3 to 8 carbon atoms.

The content of the zinc dialkyl dithiocarbamate as the component (e) for use in the grease composition of the invention is in the range of 0.1 to 10 mass%, and preferably 0.5 to 5 mass%, based on the total mass of the grease composition. When the content is less than 0.1 mass%, the effects will become insufficient. Even though the content of the component (e) exceeds 10 mass%, further enhancement of the effect cannot be recognized.

The mixing ratio by mass of the zinc dithiophosphate (c), the molybdenum dialkyl dithiocarbamate sulfide (d) to the zinc dialkyl dithiocarbamate (e) in the grease composition of the invention may be preferably 1 : (0.3 to 3.0) : (0.1 to 5.0), and more preferably 1 : (0.5 to 1.5) : (0.2 to 3.0).

The molybdenum disulfide optionally used in the invention as the component (f) is widely employed as a solid lubricant in the constant velocity joints. The molybdenum disulfide has a lamella lattice structure, so that its lubricating mechanism is known to reduce the frictional resistance by allowing easy sliding of the layers to cause easy shear between the layers. This component also has an effect on prevention of seizing of the constant velocity joints.

The content of the component (f) is in the range of 0.1 to 10 mass%, and preferably 0.5 to 5 mass%, based on the total mass of the grease composition.

In addition to the above-mentioned components, the grease composition of the invention may further comprise other additives typically contained in the grease compositions, such as other extreme pressure agents, an antioxidant, a rust preventive, a corrosion inhibitor and the like.

The present invention provides a constant velocity joint comprising the inventive grease composition, according to claims 6 and 7.

The constant velocity joints of the invention where the member for transmitting the torque is in the form of a ball include, for example, fixed type constant velocity joints such as Rzeppa joints, bar field joints and the like; and plunging constant velocity joints such as double offset joints, cross groove joints and the like. In each of those joints, the balls, which are used as a torque transmission member are seated in tracks between an outer ring and an inner ring, and incorporated in the joint through a cage.

When the constant velocity joints of the invention are of a fixed type, the constant velocity joints include, for example, Rzeppa joints, bar field joints and the like as mentioned above. When the constant velocity joints of the invention are of a plunging type, the constant velocity joints include, for example, double offset joints, cross groove joints and the like as mentioned above, where the joints can slide in the axial direction simultaneously with the occurrence of an operating angle.

The grease composition for constant velocity joints according to the invention is applicable to any constant velocity joints with no limitation. In particular, the effects of the invention become more significant when the grease composition is used for cross groove type constant velocity joints, especially used for the cross groove type constant velocity joints for propeller shafts which are driven at higher speed rotation.

The present invention will now be explained in more detail with reference to the examples.

### Preparation of Grease Compositions

After 1050 g of a base oil and 294.3 g of diphenylmethane-4,4'-diisocyanate were weighed into a first container, the resultant mixture was heated to 70 to 80°C. In a second container 460 g of a base oil and 605.7 g of octadecylamine were weighed, and the resultant mixture was heated to 70 to 80°C and then added to the first container. With thoroughly stirring, the reaction was caused for 30 minutes. After stirring under application of heat, the reaction mixture was cooled, thereby obtaining a urea grease base product. To the urea grease base product thus obtained, additives were added in such amounts as shown in Table 1, and the base oil was appropriately added to obtain a mixture. Using a three-roll mill, the resultant mixture was adjusted to have a grade 1 in terms of consistency.

The characteristics of the grease compositions obtained in Examples and Comparative Examples were evaluated in accordance with the following test methods. The results are shown in Table 1.

### (1) Kinematic viscosity of base oil

The kinematic viscosity of base oil was determined at 100°C in accordance with JIS K2283.

### (2) Low-temperature torque test

The starting torque at -40°C was measured in accordance with JIS K2220.

The evaluation criteria are as follows:

| | | |
|---|---|---|
| Starting torque: | 1500 mN•m or less | good = ○ |
| | more than 1500 mN•m | not good = x |

### (3) SRV test

The test was conducted in accordance with ASTM D5707.

| | |
|---|---|
| Test pieces | ball with a diameter of 17 mm (SUJ2) |
| | plate: 24 mm (dia.) x 7.85 mm (SUJ2) |

### Test conditions

Load: 500 N
Frequency: 50 Hz
Stroke amplitude: 1.5 mm
Duration: 60 minutes
Test temperature: 150°C
Measuring items: Coefficient of friction, diameter of wear scar on ball
The evaluation criteria are as follows:

### SRV test

| | | |
|---|---|---|
| Coefficient of friction: | 0.4 or less | good = ○ |
| | more than 0.4 | not good = x |
| Diameter of wear scar: | 0.7 mm or less | good = ○ |
| | more than 0.7 mm | not good = x |

### (4) Bench test

### Test conditions

Number of revolutions: 6000 rpm
Torque: 200 N•m
Angle: 3 deg.
Operating time: 100 hours
Type of joint: cross groove joint

### Measuring items:

*Temperature control properties: The temperature of the surface of the outer ring was measured during the test.

The evaluation criteria are as follows:

| | |
|---|---|
| 120°C or less | good = ○ |
| more than 120°C | not good = x |

* Durability: The area where the flaking took place on a portion of the joint was determined after the test.

The evaluation criteria are as follows:
Flaking occurrence area on outer ring groove: less than 20 mm² excellent = oo
Flaking occurrence area on outer ring groove: less than 25 mm² good = o
Flaking occurrence area on outer ring groove: 25 mm² or more not good = x

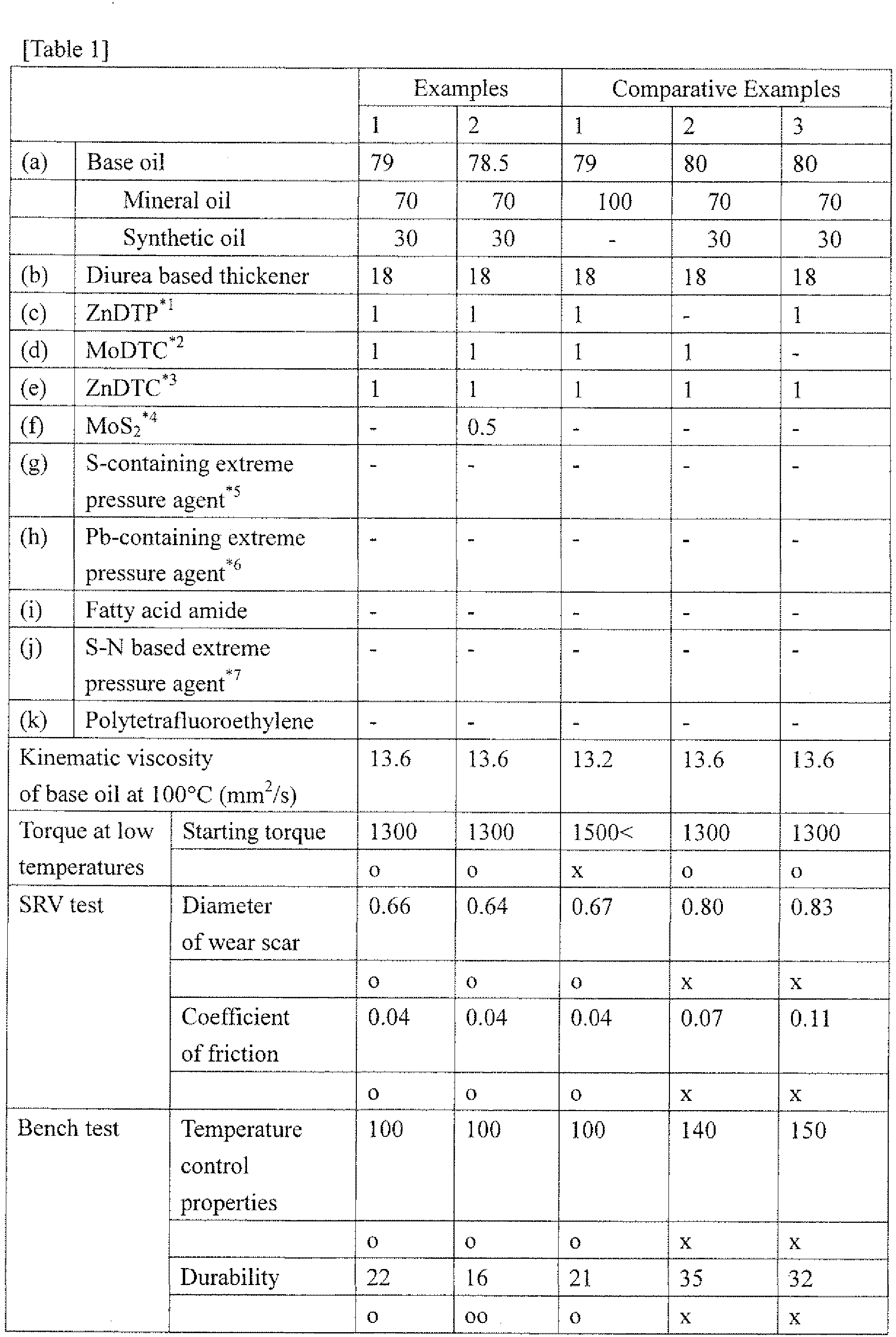

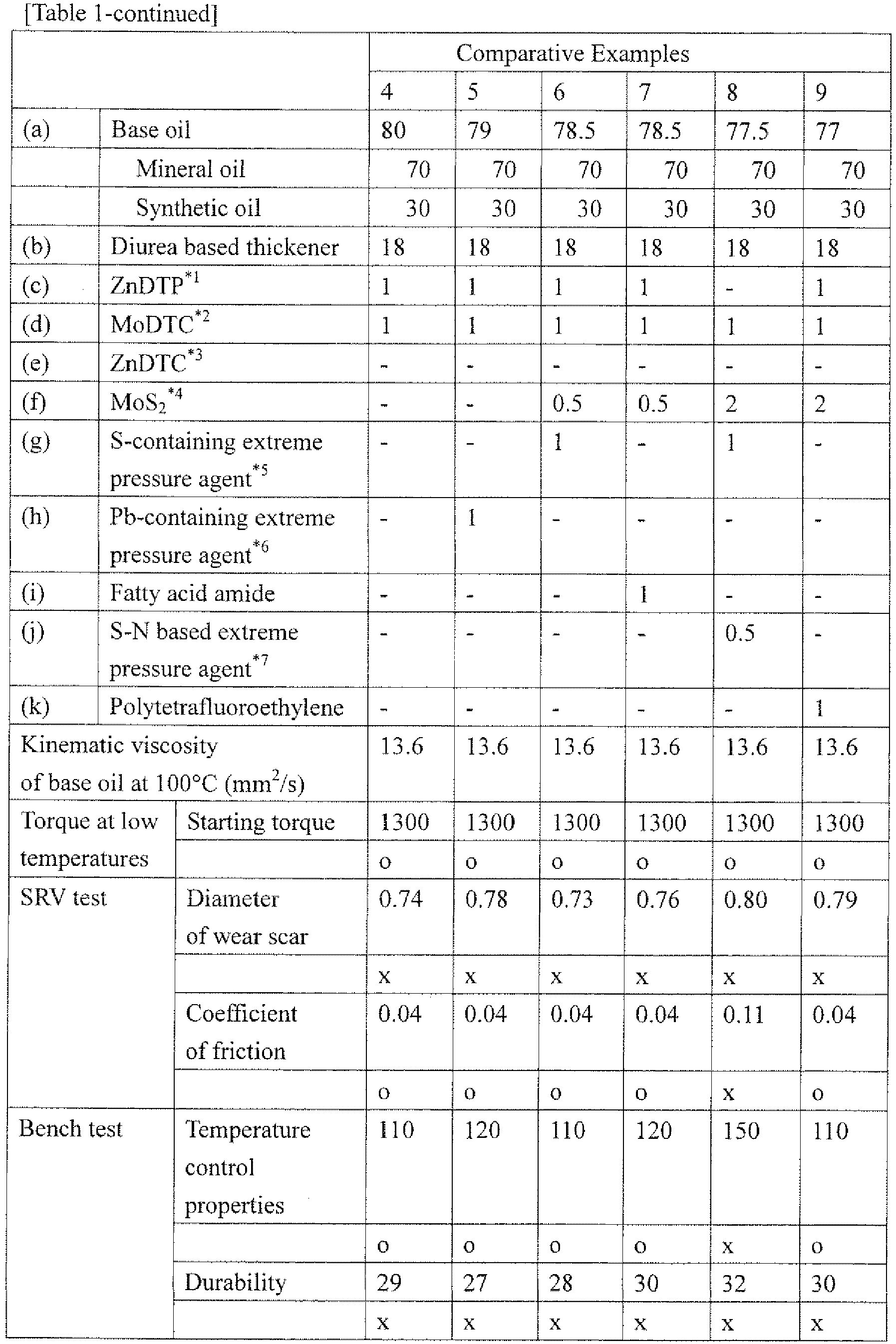

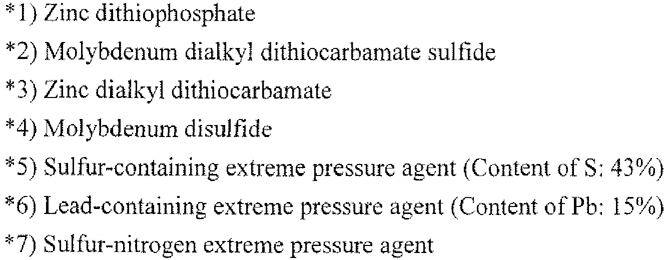

As can be seen from the above, within a range of operating temperatures from 150 to -40°C, the grease compositions for constant velocity joints obtained in Examples 1 and 2 according to the invention can reduce the rotating torque at low temperatures and exhibit superior durability and temperature control properties under the conditions of high-speed rotation when compared with the grease compositions obtained in Comparative Examples 1 to 4 where any one of the components (a), (c), (d) and (e) is not contained. The grease composition of Example 2 comprising the component (f) is found to be superior to that of Example 1 free from the component (f) in terms of the durability under the conditions of high-speed rotation.

The wear scar on the ball becomes larger in the SRV test, indicating poor durability in Comparative Example 5 where the Pb-containing extreme pressure agent is used as the component (h) instead of the component (e), i.e., ZnDTC as in Example 1; Comparative Example 6 (corresponding to JP 10-273691 A) where the S-containing extreme pressure agent is used as the component (g) instead of the component (e), i.e., ZnDTC as in Example 2; Comparative Example 7 (corresponding to JP 2001-11481 A) where the fatty acid amide is used as the component (i) instead of the component (e), i.e., ZnDTC as in Example 2; and Comparative Example 9 (corresponding to JP 2007-138110 A) where MoS₃ of the component (f) and polytetrafluoroethylene of the component (k) are used instead of the component (e), i.e., ZnDTC as in Example 2.

In Comparative Example 8 (corresponding to JP 10-273692 A) where MoS₃ of the component (f), the S-containing extreme pressure agent of the component (g) and the S-N based extreme pressure agent of the component (j) are used instead of the component (c), i.e., ZnDTP and the component (e), i.e., ZnDTC as in Example 1, the coefficient of friction becomes higher and the wear scar on the ball becomes larger in diameter in the SRV test and the temperature control properties and the durability are also worsened.

## Claims

1. A grease composition for constant velocity joints, comprising the following components (a) to (e):
(a) a base oil comprising 10 mass% or more, with respect to the total mass of the base oil, of a synthetic ester oil,
(b) 1 to 30 mass%, based on the total mass of the grease composition, of a diurea thickener represented by the following formula (1):
R¹NH-CO-NH-C₆H₄-p-CH₂-C₆H₄-p-NH-CO-NHR² (1)
wherein R¹ and R², which may be the same or different, are each an alkyl group having 8 to 20 carbon atoms, an aryl group having 6 to 12 carbon atoms, or a cycloalkyl group having 6 to 12 carbon atoms,
(c) 0.1 to 10 mass%, based on the total mass of the grease composition, of a zinc dithiophosphate,
(d) 0.1 to 10 mass%, based on the total mass of the grease composition, of a molybdenum dialkyl dithiocarbamate sulfide represented by formula (2):
[R⁴R⁵N-CS-S]₂-Mo₂OₘSₙ (2)
wherein
R⁴ and R⁵ are each independently an alkyl group having 1 to 24 carbon atoms;
m is 0 to 3; and
n is 1 to 4, wherein m + n = 4,
(e) 0.1 to 10 mass%, based on the total mass of the grease composition, of a zinc dialkyl dithiocarbamate, and
(f) optionally 0.1 to 10 mass%, based on the total mass of the grease composition, of a molybdenum disulfide,
wherein the synthetic ester oil is selected from triesters of the group consisting of hexyl trimellitic acid ester, octyl trimellitic acid ester, heptyl trimellitic acid ester, 2-ethylbutyl trimellitic acid ester, 2-ethylhexyl trimellitic acid ester, nonan-2-ol trimellitic acid ester, and isodecyl alcohol trimellitic acid ester.

2. The grease composition of claim 1, wherein the zinc dithiophosphate (c) is represented by the following formula (3): 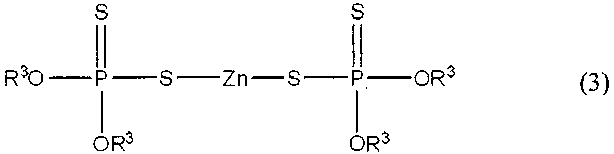 wherein R³ is an alkyl group having 1 to 24 carbon atoms or an aryl group having 6 to 30 carbon atoms.

3. The grease composition of claim 1 or 2, wherein the zinc dialkyl dithiocarbamate (e) is represented by the following formula (4):
[R⁶₂N-CS-S]₂-Zn (4)
wherein R⁶ indicates a primary or secondary alkyl group having 1 to 24 carbon atoms or an aryl group having 6 to 30 carbon atoms.

4. The grease composition of any one of claims 1 to 3, wherein in the grease composition the mixing ratio by mass of zinc dithiophosphate (c) to molybdenum dialkyl dithiocarbamate sulfide (d) to zinc dialkyl dithiocarbamate (e) is 1 : (0.3 to 3.0) : (0.1 to 5.0), preferably 1 : (0.5 to 1.5) : (0.2 to 3.0).

5. Use of a grease composition as defined in any one of claims 1 to 4 for constant velocity joints.

6. A constant velocity joint comprising a constant velocity joint and a grease composition of any one of claims 1 to 4.

7. The use of claim 5 or the constant velocity joint of claim 6, wherein the constant velocity joint are cross groove type constant velocity joints.

## Patentansprüche

1. Eine Schmiermittelzusammensetzung für Gleichlaufgelenke, umfassend die folgenden Bestandteile (a) bis (e):
(a) ein Basisöl, umfassend 10 Massen-% oder mehr, bezogen auf die Gesamtmasse des Basisöls, eines synthetischen Esteröls,
(b) 1 bis 30 Massen-%, bezogen auf die Gesamtmasse der Schmiermittelzusammensetzung, eines Diharnstoff-Verdickungsmittels, dargestellt durch die folgende Formel (1):
R¹NH-CO-NH-C₆H₄-p-CH₂-C₆H₄-p-NH-CO-NHR² (1)
wobei R¹ und R², welche gleich oder verschieden sein können, jeweils eine Alkylgruppe mit 8 bis 20 Kohlenstoffatomen, eine Arylgruppe mit 6 bis 12 Kohlenstoffatomen oder eine Cycloalkylgruppe mit 6 bis 12 Kohlenstoffatomen sind,
(c) 0,1 bis 10 Massen-%, bezogen auf die Gesamtmasse der Schmiermittelzusammensetzung, eines Zinkdithiophosphats,
(d) 0,1 bis 10 Massen-%, bezogen auf die Gesamtmasse der Schmiermittelzusammensetzung, eines Molybdän-dialkyl-dithiocarbamatsulfids dargestellt durch Formel (2):
[R⁴R⁵N-CS-S]₂-Mo₂OₘSₙ (2)
wobei
R⁴ und R⁵ jeweils unabhängig eine Alkylgruppe mit 1 bis 24 Kohlenstoffatomen sind;
m gleich 0 bis 3 ist; und
n gleich 1 bis 4 ist, wobei m + n = 4,
(e) 0,1 bis 10 Massen-%, bezogen auf die Gesamtmasse der Schmiermittelzusammensetzung, eines Zink-dialkyl-dithiocarbamats, und
(f) gegebenenfalls 0,1 bis 10 Massen-%, bezogen auf die Gesamtmasse der Schmiermittelzusammensetzung, eines Molybdändisulfids,
wobei das synthetische Esteröl ausgewählt ist aus Triestern der Gruppe, bestehend aus Hexyltrimellitsäureester, Octyltrimellitsäureester, Heptyltrimellitsäureester, 2-Ethylbutyltrimellitsäureester, 2-Ethylhexyltrimellitsäureester, Nonan-2-ol-trimellitsäureester und Isodecylalkoholtrimellitsäureester.

2. Die Schmiermittelzusammensetzung gemäß Anspruch 1, wobei das Zinkdithiophosphat (c) dargestellt ist durch die folgende Formel (3): 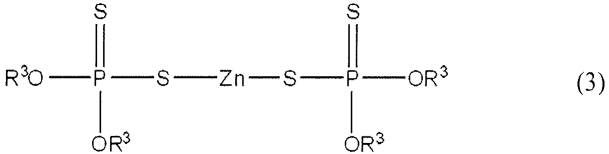 wobei R³ eine Alkylgruppe mit 1 bis 24 Kohlenstoffatomen oder eine Arylgruppe mit 6 bis 30 Kohlenstoffatomen ist.

3. Die Schmiermittelzusammensetzung gemäß Anspruch 1 oder 2, wobei das Zink-dialkyldithiocarbamat (e) dargestellt ist durch die folgende Formel (4):
[R⁶₂N-CS-S]₂-Zn (4)
wobei R⁶ eine primäre oder sekundäre Alkylgruppe mit 1 bis 24 Kohlenstoffatomen oder eine Arylgruppe mit 6 bis 30 Kohlenstoffatomen bezeichnet.

4. Die Schmiermittelzusammensetzung gemäß einem der Ansprüche 1 bis 3, wobei in der Schmiermittelzusammensetzung das Mischungsverhältnis, bezogen auf die Masse, von Zinkdithiophosphat (c) zu Molybdän-dialkyl-dithiocarbamatsulfid (d) zu Zink-dialkyldithiocarbamat (e) 1 : (0,3 bis 3,0) : (0,1 bis 5,0), bevorzugt 1 : (0,5 bis 1,5) : (0,2 bis 3,0) beträgt.

5. Verwendung einer Schmiermittelzusammensetzung, wie in einem der Ansprüche 1 bis 4 definiert, für Gleichlaufgelenke.

6. Ein Gleichlaufgelenk, umfassend ein Gleichlaufgelenk und eine Schmiermittelzusammensetzung gemäß einem der Ansprüche 1 bis 4.

7. Die Verwendung gemäß Anspruch 5 oder das Gleichlaufgelenk gemäß Anspruch 6, wobei das Gleichlaufgelenk Gleichlaufgelenke vom Querrillentyp sind.

## Revendications

1. Composition de graisse pour joints homocinétiques, comprenant les composants (a) à (e) suivants :
(a) une huile de base comprenant 10 % en masse ou plus, par rapport à la masse totale de l'huile de base, d'une huile de type ester synthétique,
(b) 1 à 30 % en masse, par rapport à la masse totale de la composition de graisse, d'un épaississant de type diurée représentée par la formule (1) suivante :
R¹NH-CO-NH-C₆H₄-p-CH₂-C₆H₄-p-NH-CO-NHR² (1)
dans laquelle chacun de R¹ et R², qui peuvent être identiques ou différents, est un groupe alkyle ayant 8 à 20 atomes de carbone, un groupe aryle ayant 6 à 12 atomes de carbone, ou un groupe cycloalkyle ayant 6 à 12 atomes de carbone,
(c) 0,1 à 10 % en masse, par rapport à la masse totale de la composition de graisse, d'un dithiophosphate de zinc,
(d) 0,1 à 10 % en masse, par rapport à la masse totale de la composition de graisse, d'un sulfure de dialkyl-dithiocarbamate de molybdène représenté par la formule (2) :
[R⁴R⁵N-CS-S]₂-Mo₂OₘSₙ (2)
dans laquelle
chacun de R⁴ et R⁵ est indépendamment un groupe alkyle ayant 1 à 24 atomes de carbone ;
m vaut de 0 à 3 ; et
n vaut de 1 à 4, avec m + n = 4,
(e) 0,1 à 10 % en masse, par rapport à la masse totale de la composition de graisse, d'un dialkyl-dithiocarbamate de zinc, et
(f) éventuellement 0,1 à 10 % en masse, par rapport à la masse totale de la composition de graisse, d'un disulfure de molybdène,
dans laquelle l'huile de type ester synthétique est choisie parmi les triesters de l'ensemble constitué par l'ester hexylique d'acide trimellitique, l'ester octylique d'acide trimellitique, l'ester heptylique d'acide trimellitique, l'ester 2-éthylbutylique d'acide trimellitique, l'ester 2-éthylhexylique d'acide trimellitique, l'ester de nonan-2-ol et d'acide trimellitique, et l'ester d'alcool isodécylique et d'acide trimellitique.

2. Composition de graisse selon la revendication 1, dans laquelle le dithiophosphate de zinc (c) est représenté par la formule (3) suivante : 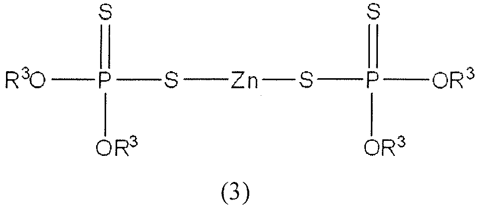 dans laquelle R³ est un groupe alkyle ayant 1 à 24 atomes de carbone ou un groupe aryle ayant 6 à 30 atomes de carbone.

3. Composition de graisse selon la revendication 1 ou 2, dans laquelle le dialkyl-dithiocarbamate de zinc (e) est représenté par la formule (4) suivante :
[R⁶₂N-CS-S]₂-Zn (4)
dans laquelle R⁶ représente un groupe alkyle primaire ou secondaire ayant 1 à 24 atomes de carbone ou un groupe aryle ayant 6 à 30 atomes de carbone.

4. Composition de graisse selon l'une quelconque des revendications 1 à 3, dans laquelle, dans la composition de graisse, le rapport de mélange en masse du dithiophosphate de zinc (c) au sulfure de dialkyl-dithiocarbamate de molybdène (d) au dialkyl-dithiocarbamate de zinc (e) est de 1 / (0,3 à 3,0) / (0,1 à 5,0), de préférence de 1 / (0,5 à 1,5) / (0,2 à 3,0).

5. Utilisation d'une composition de graisse telle que définie dans l'une quelconque des revendications 1 à 4 pour des joints homocinétiques.

6. Joint homocinétique comprenant un joint homocinétique et une composition de graisse de l'une quelconque des revendications 1 à 4.

7. Utilisation selon la revendication 5 ou joint homocinétique selon la revendication 6, dans lequel le joint homocinétique est un joint homocinétique du type à cannelure entrecroisée.
